# EUROPÄISCHE PATENTSCHRIFT

(11) **EP 1 226 662 B1**
(45) Veröffentlichungstag und Bekanntmachung des Hinweises auf die Patenterteilung: **28.04.2004**
(21) Anmeldenummer: 99963210.2
(22) Anmeldetag: 04.11.1999
(51) Int. Cl.: H04B 7/005

(54) **VORRICHTUNG ZUR IMPLEMENTIERUNG VON LEISTUNGS-STEUERDATEN IN EINEM SENDESIGNAL**
DEVICE FOR INTEGRATING POWER-CONTROL DATA INTO A TRANSMISSION SIGNAL
DISPOSITIF POUR INTRODUIRE DES DONNEES DE COMMANDE DE PUISSANCE DANS UN SIGNAL D'EMISSION

(43) Veröffentlichungstag der Anmeldung: 31.07.2002
(73) Patentinhaber: Infineon Technologies AG, 81669 München (DE)
(72) Erfinder: DOETSCH, Markus, D-56072 Koblenz-Rübenach (DE); JUNG, Peter, D-67697 Otterberg (DE); PLECHINGER, Jörg, D-80469 München (DE); SCHMIDT, Peter, D-67158 Ellerstadt (DE); SCHNEIDER, Michael, 56823 Büchel (DE); BECKER, Burkhard, 85737 Ismaning (DE); FEYFANT, Patrick, 88 Guang Yuan Xi Rd., Sahanghai 200030 (CN); KELLA, Tideya, 80337 München (DE)
(74) Vertreter: Graf Lambsdorff, Matthias, Dr.
(86) Internationale Anmeldenummer: PCT/DE1999/003538
(87) Internationale Veröffentlichungsnummer: WO 2001/033735

(56) Entgegenhaltungen:
- EP-A- 0 893 889
- WO-A-95/24773
- US-A- 5 987 333

## Beschreibung

Die Erfindung betrifft eine Vorrichtung zur Implementierung von Leistungs-Steuerdaten in ein Sendesignal, insbesondere in ein CDMA-Sendesignals.

Bei Mobilfunksystemen kommunizieren mobile Funkstationen MS mit einer Basisstation BS. Da die Anzahl der gleichzeitig mit einer Basisstation kommunizierenden Mobilstationen hoch ist, muß die Sendeleistung eines Sendesignals sowohl bei der mobilen Station MS als auch bei der Basisstation BS geregelt werden, damit sich Sendesignale verschiedener Stationen nicht gegenseitig stören.

CDMA (Code Division Multiple Access) ist ein Kanalzugriff-Verfahren, das bei zellularen Mobilfunksystemen eingesetzt wird. Bei CDMA-Mobilfunksystemen senden mehrere Teilnehmer, die sich nur durch einen auf das Sendesignal aufgeprägten orthogonalen teilnehmer-spezifischen Spreizsignalcode unterscheiden, gleichzeitig im selben Frequenzband. Eine Separierung bzw. Trennung der verschiedenen Teilnehmer wird durch eine Rückspreizung mit dem jeweiligen teilnehmer-spezifischen orthogonalen Code erreicht. Aufgrund des realen Mobilfunkkanals sind jedoch die empfangenen Signale nicht mehr vollständig orthogonal. Damit eine Separierung der Signale ermöglicht wird, ist es daher notwendig, daß die verschiedenen empfangenen Signale mit ungefähr der gleichen Sendeleistung am Empfänger eintreffen, da sonst die gewünschten Signale durch Interferenz mit den Sendesignalen anderer Teilnehmer so stark gestört werden, daß keine Separierung mehr möglich ist.

Bei CDMA-Mobilfunksystemen ist daher eine besonders schnelle Leistungsregelung des Sendesignals sowohl in der Mobilfunkstation MS als auch in der Basisstation BS erforderlich.

Die Leistungsregelung des jeweiligen Senders einer Station erfolgt durch Leistungsteuerdaten, die aus dem Empfangssignal derjenigen Station gewonnen werden, mit der die betreffende Station kommuniziert. Die Leistung des Sendesignals der Basisstation BS für einen spezifischen Teilnehmer wird über ein Leistungssteuersignal TPC der mobilen Station MS gesteuert. Umgekehrt wird die Leistung des Sendesignals der mobilen Station MS durch das von der Basisstation BS gesendete Leistungssteuersignal TPC gesteuert. Die Generierung bzw. Erzeugung der jeweiligen Steuerdaten in einer Station geschieht dabei durch Auswertung des gesamten durch die Station empfangenen Signals mittels einer Signal zu Interferenz- und Rauschverhältnisschätzung, d. h. einer sogenannten SINR-Schätzung.

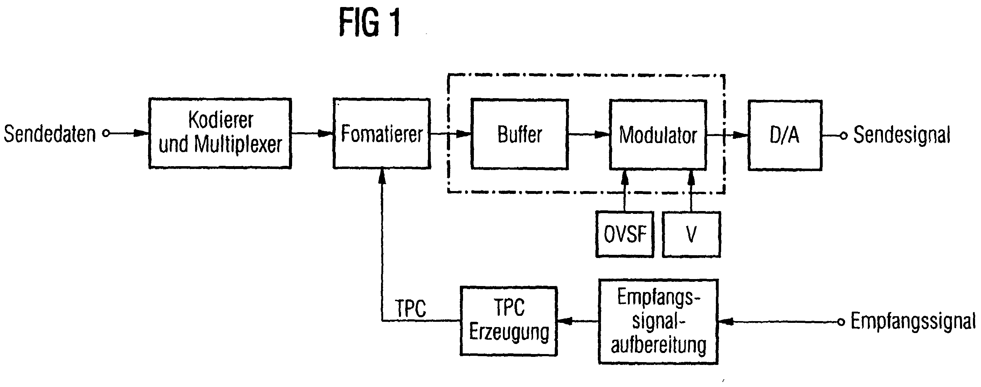

Fig.1 zeigt eine Vorrichtung zur Einfügung von Leistungs-Steuerdaten nach dem Stand der Technik.

Die von der Station zu sendenden Sendedaten werden einem Codierer und Multiplexer zugeführt. Die codierten und multiplexten Sendedaten werden in einem Formatierer zu einem Sende-Datenwort mit mehreren Datenfeldern formatiert. Das Sende-Datenwort hat dabei die Länge eines Zeitschlitzes des Mobilfunksystems. Die Datenfelder dienen zur Aufnahme von Informationsdaten, Pilotdaten, Formatierungsdaten sowie von Leistungssteuerdaten TPC.

Die Leistungssteuerdaten TPC werden in einer Steuerdatenerzeugungseinrichtung durch SINR-Schätzung eines durch eine Empfangssignal-Aufbereitungsschaltung aufbereiteten Empfangssignals gewonnen. Sämtliche Daten, die innerhalb eines Zeitschlitzes des Mobilfunksystems übertragen werden sollen, wie Informationsdaten, Pilotdaten, Formatierungsdaten und die Leistungssteuerdaten TPC, werden in dem Formatierer zusammengefügt. Die Formatierung wird beispielsweise in einem DSP-Prozessor oder Microcontroller vorgenommen. Das fertig formatierte Sende-Datenwort wird über eine Signalverbindungsleitung, beispielsweise einen BUS in einen Eingangs-Buffer bzw. Eingangs-Zwischenspeicher eines Modulators übertragen. Der Eingangs-Zwischenspeicher weist für gewöhnlich eine Speicherkapazität auf, die der Datenlänge von zwei Zeitschlitzen bzw. zwei Sende-Datenworten entspricht. Der Modulator bereitet die in dem Eingangszwischenspeicher abgespeicherten Sende-Datenwörter zur Signalübertragung auf. Hierzu führt er in einem CDMA-Mobilfunksystem eine Spreizung mit orthogonalen OVSF-Codes durch, die in einem Speicher abgespeichert sind. Ferner erfolgt eine Verschlüsselung bzw. Scrambling mit Verschlüsselungscodes, die durch einen Verschlüsselungsgenerator V erzeugt werden. Durch Digital-Analog-Wandlung mittels eines nachgeschalteten DA-Wandlers wird anschließend das Sendesignal erzeugt.

Wie man aus Fig. 1 erkennen kann, besteht zwischen dem Zeitpunkt, an dem die Leistungssteuerdaten zur Regelung basierend auf einer Interferenz- und Rauschverhältnisschätzung erzeugt werden und dem Zeitpunkt, an dem die Leistungs-Steuerdaten durch den Modulator zur Übertragung aufbereitet werden, eine Verzögerungs-Zeitspanne, die der Speicherkapazität des Zwischenspeichers bzw. Buffers entspricht. Insbesondere bei CDMA-Mobilfunksystemen, die eine besonders schnelle Leistungsregelung erfordern, kann eine derart lange Reaktionszeit bis die Leistungssteuerdaten nach der SINR-Auswertung gesendet werden zu einer erheblichen Verschlechterung der Signalübertragung aufgrund der Interferenz mit Sendesignalen von anderen Teilnehmern führen.

Die EP 0 893 889 A2 offenbart ein Verfahren und eine Vorrichtung zur Steuerung der Sendeleistung in einem CDMA-Kommunikationssystem. Auf der Basis einer SINR-Schätzung wird TPC-Signal erzeugt und einem sogenannten Level Controller zugeführt, welcher Leistungs-Steuerungsdaten erzeugt, die dann durch den sogenannten Time Multiplexer in das Leistungs-Steuerungs-Datenfeld des zwischengespeicherten Sende-Datenwortes eingefügt werden. Die Vorrichtung weist ferner eine Modulationseinrichtung zur Modulation des Sende-Datenwortes zu einem Sendesignal mit einer Sendeleistung entsprechend den Leistungs-Steuerungsdaten auf.

Es ist daher die Aufgabe der vorliegenden Erfindung eine Vorrichtung zur Implementierung von Leistungs-Steuerdaten in ein Sendesignal zu schaffen, durch die die Sendeleistung der Station schnell geregelt wird.

Diese Aufgabe wird erfindungsgemäß durch eine Vorrichtung zur Implementierung von Leistungs-Steuerdaten in ein Sendesignal mit den im Patentanspruch 1 angegebenen Merkmalen gelöst.

Die Erfindung schafft eine Vorrichtung zur Implementierung von Leistungs-Steuerdaten in ein Sendesignal mit einer Erzeugungseinrichtung zur Erzeugung von Leistungs-Steuerdaten in Abhängigkeit von einem empfangenen Signal, einem Zwischenspeicher zum Zwischenspeichern eines formatierten Sende-Datenwortes, das ein Leistungssteuerungs-Datenfeld zur Aufnahme von Leistungssteuerungsdaten enthält, einer Einfügeeinrichtung zum Einfügen der erzeugten Leistungs-Steuerdaten in das Leistungs-Steuerungs-Datenfeld des zwischengespeicherten Sende-Datenwortes und mit einer Modulationseinrichtung zur Modulation des Sende-Datenwortes zu einem Sendesignal, dessen Sendeleistung durch die Leistungs-Steuerungsdaten gesteuert wird.

Weitere vorteilhafte Ausgestaltungen der erfindungsgemäßen Vorrichtung ergeben sich aus den Unteransprüchen.

Bei einer bevorzugten Ausführungsform ist das Sendesignal ein CDMA-Sendesignal.

Die Erzeugungseinrichtung zur Erzeugung von Sendeleistungs-Steuerdaten erzeugt die Sendeleistungs-Steuerdaten vorzugsweise mittels einer Signal-Interferenz- und Rauschverhältnisschätzung des empfangenen Signals.

Die Formatierungseinrichtung formatiert bei einer bevorzugten Ausführungsform codierte und multiplexte Sendedaten zu einem formatierten Sende-Datenwort.

Das formatierte Sende-Datenwort besteht vorzugsweise aus mehreren Datenfeldern.

Die Länge des formatierten Sende-Datenwortes ist vorzugsweise identisch mit der Länge eines CDMA-Zeitschlitzes.

Das Leistungs-Steuerungs-Datenfeld der formatierten Sende-Datenwortes wird in dem Formatierer bei einer bevorzugten Ausführungsform mit bestimmten Fülldaten gefüllt.

Die Fülldaten sind vorzugsweise derart ausgebildet, daß sie keine Änderung der Sendeleistung bewirken.

Die Formatierungseinrichtung ist mit dem Zwischenspeicher vorzugsweise über einen Signalbus verbunden.

Bei einer bevorzugten Weiterbildung der erfindungsgemäßen Vorrichtung ist die Modulationseinrichtung ein digitaler Modulator, dem ein Digital-Analog-Wandler nachgeschaltet ist.

Im weiteren werden bevorzugte Ausführungsformen der erfindungsgemäßen Vorrichtung unter Bezugnahme auf die beigefügten Figuren zur Erläuterung erfindungswesentlicher Merkmale beschrieben.

Es zeigen:
- Fig.1:: eine Vorrichtung zur Einfügung von Leistungs-Steuerdaten nach dem Stand der Technik;
- Fig.2:: eine Vorrichtung zur Implementierung von Leistungs-Steuerdaten in ein Sendesignal gemäß der vorliegenden Erfindung.

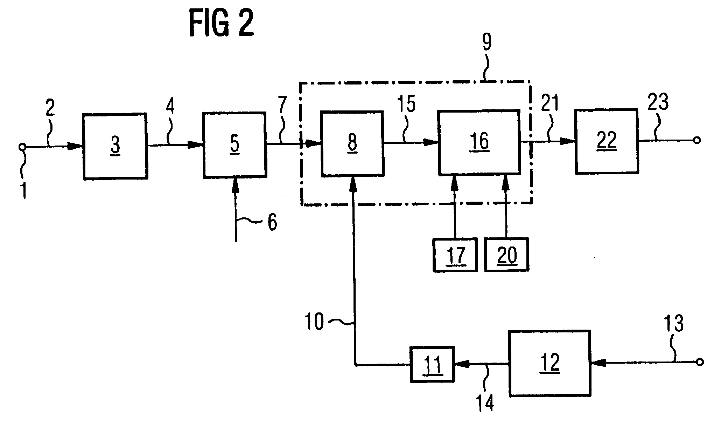

Wie man aus Figur 2 erkennen kann, gelangen die von der Station zu sendenden Sendedaten über einen Sendedateneingang 1 der erfindungsgemäßen Leistungsregelung über eine Datenleitung 2 zu einer Codier- und Multiplexeinrichutng 3. Die codierten Sendedaten werden über eine interne Leitung 4 einer Formatierungseinrichtung 5 zugeführt. Die Formatierungseinrichtung 5 formatiert die ihr über die Leitung 4 zugeführten codierten Sendedaten zu formatierten Sende-Datenwörtern. Die formatierten Sende-Datenwörter bestehen jeweils aus mehreren Datenfeldern, die Informationsdaten, Pilotdaten und Formatierungsdaten enthalten. Darüber hinaus weisen die Sende-Datenwörter jeweils ein Leistung-Steuerungs-Datenfeld auf, das zur Aufnahme von Leistungs-Steuerungsdaten reserviert ist. Über eine Leitung 6 wird das Leistungs-Steuerungsdatenfeld des formatierten Sende-Datenwortes mit Fülldaten, beispielsweise einer Folge von binären Nullen aufgefüllt, wobei die Fülldaten derart sind, daß sie keine Änderung der Sendeleistung hervorrufen. Die Formatierungseinrichtung 5 gibt über Signalverbindungsleitungen 7, die beispielsweise einen Signalbus bilden, die formatierten Sende-Datenwörter an einen Eingangs-Zwischenspeicher bzw. Puffer 8 des Modulators 9 ab.

Der Zwischenspeicher 8 ist mit einer Daten-Einfügeeinrichtung verbunden, die über eine Steuerleitung 10 Leistungs-Steuerdaten von einer Erzeugungseinrichtung 11 zur Erzeugung von Leistungs-Steuerdaten empfängt. Die Erzeugungseinrichtung 11 zur Erzeugung von Leistungs-Steuerdaten erzeugt vorzugsweise die Leistungs-Steuerdaten mittels einer Signal-Interferenz- und Rauschverhältnisschätzung bzw. SINR-Schätzung aus einem durch eine Empfangssignalaufbereitungsschaltung 12 aufbereiteten Empfangssignal. Das durch die Station empfangene Empfangssignal wird über eine Leitung 13 der Empfangssignalaufbereitungsschaltung 12 zugeführt und dort signalmäßig aufbereitet. Die Empfangssignalaufbereitungsschaltung 12 enthält mehrere Stufen wie Filter, Analog-Digital-Wandler, Impulsformer RRC, Rake-Schaltungen und eine MRC-Schaltung (MRC: Maximum Ratio Combining). Die Signalaufbereitungsschaltung 12 ist ausgangsseitig über eine Leitung 14 mit der Erzeugungseinrichtung 11 zur Erzeugung der Leistungs-Steuerdaten verbunden.

Die in der Erzeugungseinrichtung 11 erzeugten Leistungs-Steuerungsdaten werden über die Leitung 10 direkt in das Leistungs-Steuerungs-Datenfeld des in dem Zwischenspeicher 8 befindlichen Sende-Datenwortes eingeschrieben. Dabei werden die Fülldaten überschrieben. Das durch Einschreiben der Leistungssteuerungsdaten vervollständigte Sende-Datenwort gelangt über eine Leitung 15 zu der eigentlichen Modulationseinrichtung 16 des Modulators 9. Die Modulationseinrichtung 16 moduliert das Sende-Datenwort, wobei eine Spreizung des schmalbandigen Signals mittels eines orthogonalen OVSF-Code zu einem breitbandigen Signal erfolgt. Der OVSF-Code ist in einem Pufferspeicher 17 abgespeichert und wird der Modulationseinrichtung 16 über eine Leitung 18 zugeführt. Ferner erhält die Modulationseinrichtung 16 über eine Leitung 19 einen Verschlüsselungs- bzw. Scrambling-Code zur Verschlüsselung des Sendesignals, wobei der Scrambling-Code durch einen Generator 20 erzeugt wird. Das durch die Modulationseinrichtung 16 modulierte Sendesignal wird über eine Leitung 21 an einen Digital-Analog-Wandler 22 abgegeben, der ein analoges Sendesignal erzeugt, das über eine Leitung 23 an eine Sendeantenne abgegeben wird.

Durch das direkte Einschreiben der Leistungs-Steuerdaten, die durch die Erzeugungseinrichtung 11 erzeugt werden, in den Zwischenspeicher 8 des Modulators 9 gelangen die Leistungs-Steuerungsdaten ohne Verzögerung direkt in den Modulator 9. Die Reaktionszeit der Leistungsregelung, wie sie in Fig. 2 gezeigt ist, gegenüber Veränderungen der Empfangssignalleistung des über die Leitung 13 empfangenen Signals wird somit erheblich verkürzt. Dies hat eine Verbesserung der System-Performance zur Folge. Leistungsschwankungen des von einer anderen Station empfangenen Empfangssignals werden durch die Leistungsregelung innerhalb der betreffenden Station in sehr kurzer Zeit erkannt, so daß diese ihr eigenes Sendesignal entsprechend verstärken oder abschwächen kann. Die Leistungs-Steuerdaten bzw. Power Control-Informationsdaten werden somit bei der erfindungsgemäßen Leitungsregelung erheblich schneller übertragen. Dabei kann der bereits in dem Modulator 9 vorhandene Eingangszwischenspeicher 8 zum Einfügen der Leistungs-Steuerungsdaten TPC ausgenutzt werden.

### Bezugszeichenliste

- 1: Dateneingang
- 2: Leitung
- 3: Einrichtung zum Codieren und Multiplexen
- 4: Leitung
- 5: Formatierungseinrichtung
- 6: Fülldatenleitung
- 7: Leitung
- 8: Zwischenspeicher
- 9: Modulator
- 10: Leitung
- 11: Leistungssteuerungsdaten-Erzeugungseinrichtung
- 12: Empfangssignal-Aufbereitungsschaltung
- 13: Leitung
- 14: Leitung
- 15: Leitung
- 16: Modulationseinrichtung
- 17: Spreizungscode-Speicher
- 18: Leitung
- 19: Leitung
- 20: Verschlüsselungscode-Generator
- 21: Leitung
- 22: Digital-Analog-Wandler
- 23: Leitung

## Patentansprüche

1. Vorrichtung zur Implementierung von Leistungs-Steuerungsdaten in ein Sendesignal mit:
- einer Erzeugungseinrichtung (11) zur Erzeugung von Leistungs-Steuerungsdaten in Abhängigkeit von einem empfangenen Signal;
- eine Einfügeeinrichtung zum Einfügen der erzeugten Leistungs-Steuerungsdaten in das Leistungs-Steuerungsdatenfeld des zwischengespeicherten Sende-Datenwortes und mit
- einer Modulationseinrichtung (16) zur Modulation des Sende-Datenwortes zu einem Sendesignal mit einer Sendeleistung entsprechend den Leistungs-Steuerungsdaten
**gekennzeichnet durch**
- einen Zwischenspeicher (8) zum Zwischenspeichern eines formatierten Sende-Datenwortes, das ein Leistungs-Steuerungs-Datenfeld zur Aufnahme von Leistung-Steuerungsdaten enthält,
- eine Formatierungseinrichtung zum Formatieren von codierten Sendedaten zu einem formatierten Sende-Datenwort, wobei das Leistungs-Steuerungs-Datenfeld des formatierten Sende-Datenwortes **durch** die Formatierungseinrichtung (5) mit vorbestimmten Fülldaten gefüllt wird, wobei die Fülldaten keine Änderung der Sendeleistung hervorrufen, und
- eine Steuerleitung (10), welche derart zwischen die Erzeugungseinrichtung (11) und den Zwischenspeicher (8) gekoppelt ist, dass die Leistungs-Steuerungsdaten mit Hilfe der Einfügeeinrichtung in das Leistungs-Steuerungs-Datenfeld des in dem Zwischenspeicher (8) befindlichen Sende-Datenwortes eingeschrieben werden, wobei die Fülldaten überschrieben werden.

2. Vorrichtung nach Anspruch 1,
**dadurch gekennzeichnet,**
**dass** das Sendesignal ein CDMA-Sendesignal ist.

3. Vorrichtung nach Anspruch 1 oder 2,
**dadurch gekennzeichnet,**
**dass** die Erzeugungseinrichtung (11) die Leistungs-Steuerungsdaten mittels einer Signal zu Interferenz- und Rauschverhältnisschätzung SINR aus dem empfangenen Signal erzeugt.

4. Vorrichtung nach einem der vorangehenden Ansprüche,
**dadurch gekennzeichnet,**
**dass** das formatierte Sende-Datenwort aus mehreren Datenfeldern besteht.

5. Vorrichtung nach einem der vorangehenden Ansprüche,
**dadurch gekennzeichnet,**
**dass** das formatierte Sende-Datenwort die Länge eines CDMA-Zeitschlitzes aufweist.

6. Vorrichtung nach einem der vorangehenden Ansprüche,
**dadurch gekennzeichnet,**
**dass** die Formatierungseinrichtung (5) mit dem Zwischenspeicher (8) über einen Signalbus verbunden ist.

7. Vorrichtung nach einem der vorangehenden Ansprüche,
**dadurch gekennzeichnet,**
**dass** die Modulationseinrichtung (16) ein digitaler Modulator ist.

8. Vorrichtung nach einem der vorangehenden Ansprüche,
**dadurch gekennzeichnet,**
**dass** der Modulationseinrichtung (16) ein Digital-Analog-Wandler (22) nachgeschaltet ist.

## Claims

1. Apparatus for implementing power control data in a transmit signal, having:
- a generating device (11) for generating power control data as a function of a received signal,
- an inserting device for inserting the generated power control data into the power control data field of the buffered transmit data word, and having
- a modulation device (16) for modulating the transmit data word to form a transmit signal with a transmit power corresponding to the power control data
**characterized by**
- a buffer (8) for buffering a formatted transmit data word that contains a power control data field for recording power control data,
- a formatting device for formatting coded transmit data into a formatted transmit data word, the power control data field of the formatted transmit data word being filled with predetermined filler data by the formatting device (5), the filler data causing no change in the transmit power, and
- a control line (10) that is coupled between the generating device (11) and the buffer (8) in such a way that the power control data are written with the aid of the inserting device into the power control data field of the transmit data word located in the buffer (8), the filler data being overwritten.

2. Apparatus according to Claim 1, **characterized in that** the transmit signal is a CDMA transmit signal.

3. Apparatus according to Claims 1 or 2, **characterized in that** the generating device (11) generates the power control data from the received signal by means of a signal to interference and noise ratio estimate SINR.

4. Apparatus according to one of the preceding claims, **characterized in that** the formatted transmit data word comprises a plurality of data fields.

5. Apparatus according to one of the preceding claims, **characterized in that** the formatted transmit data word has the length of a CDMA time slot.

6. Apparatus according to one of the preceding claims, **characterized in that** the formatting device (5) is connected to the buffer (8) via a signal bus.

7. Apparatus according to one of the preceding claims, **characterized in that** the modulation device (16) is a digital modulator.

8. Apparatus according to one of the preceding claims, **characterized in that** a digital-to-analog converter (22) is connected downstream of the modulation device (16).

## Revendications

1. Dispositif pour introduire des données de commande de puissance dans un signal d'émission comprenant :
- un dispositif de production (11) pour produire des données de commande de puissance en fonction d'un signal reçu ;
- un dispositif d'insertion pour insérer les données de commande de puissance dans le champ de données de commande de puissance du mot de données d'émission mémorisé temporairement, et
- un dispositif de modulation (16) pour moduler le mot de données d'émission en un signal d'émission avec une puissance d'émission selon les données de commande de puissance,
**caractérisé par**
- une mémoire intermédiaire (8) pour mémoriser temporairement un mot de données d'émission formaté qui contient un champ de données de commande de puissance destiné à la réception de données de commande de puissance,
- un dispositif de formatage pour formater des données d'émission codées en un mot de données d'émission formaté, le champ de données de commande de puissance du mot de données d'émission formaté étant rempli par le dispositif de formatage (5) avec des données de remplissage prédéterminées, les données de remplissage ne provoquant aucune modification de la puissance d'émission, et
- une ligne de commande (10) qui est couplée de telle sorte entre le dispositif de production (11) et la mémoire intermédiaire (8) que les données de commande de puissance sont écrites à l'aide du dispositif d'insertion dans le champ de données de commande de puissance du mot de données d'émission se trouvant dans la mémoire intermédiaire (8), les données de remplissage étant recouvertes.

2. Dispositif selon la revendication 1,
**caractérisé par le fait que** le signal d'émission est un signal d'émission CDMA.

3. Dispositif selon la revendication 1 ou 2,
**caractérisé par le fait que** le dispositif de production (11) produit les données de commande de puissance au moyen d'une estimation du rapport entre le signal et l'interférence ou le bruit SINR à partir du signal reçu.

4. Dispositif selon l'une des revendications précédentes,
**caractérisé par le fait que** le mot de données d'émission formaté est constitué de plusieurs champs de données.

5. Dispositif selon l'une des revendications précédentes,
**caractérisé par le fait que** le mot de données d'émission formaté a la longueur d'un créneau temporel CDMA.

6. Dispositif selon l'une des revendications précédentes,
**caractérisé par le fait que** le dispositif de formatage (5) est relié à la mémoire intermédiaire (8) par l'intermédiaire d'un bus de signal.

7. Dispositif selon l'une des revendications précédentes,
**caractérisé par le fait que** le dispositif de modulation (16) est un modulateur numérique.

8. Dispositif selon l'une des revendications précédentes,
**caractérisé par le fait qu'**un convertisseur numérique-analogique (22) est branché du côté aval du dispositif de modulation (16).
